# EUROPÄISCHE PATENTSCHRIFT

(11) **EP 2 376 937 B1**
(45) Veröffentlichungstag und Bekanntmachung des Hinweises auf die Patenterteilung: **08.07.2015**
(21) Anmeldenummer: 09736963.1
(22) Anmeldetag: 20.10.2009
(51) Int. Cl.: G01S 7/03

(54) **FMCW-RADARSENSOR FÜR KRAFTFAHRZEUGE**
FMCW RADAR SENSOR FOR MOTOR VEHICLES
DÉTECTEUR RADAR À ONDE CONTINUE À MODULATION DE FRÉQUENCE (FMCW) POUR VÉHICULES À MOTEUR

(30) Priorität: 12.12.2008 DE 102008054570
(43) Veröffentlichungstag der Anmeldung: 19.10.2011
(73) Patentinhaber: Robert Bosch GmbH, 70442 Stuttgart (DE)
(72) Erfinder: HIMMELSTOSS, Armin, 71554 Weissach Im Tal (DE); WALTER, Thomas, 71272 Renningen (DE); SCHNEIDER, Thomas, 40789 Monheim (DE); HAUK, Joachim, 71272 Renningen-Malmsheim (DE)
(86) Internationale Anmeldenummer: PCT/EP2009/063701
(87) Internationale Veröffentlichungsnummer: WO 2010/066495

(56) Entgegenhaltungen:
- DE-A1-102004 051 276
- US-A1- 2003 156 060

## Beschreibung

### Stand der Technik

Die Erfindung betrifft einen FMCW-Radarsensor für Kraftfahrzeuge, mit einem Hochfrequenzteil zum erzeugen, senden und empfangen von Radarsignalen, einer Modulationseinrichtung zur Steuerung der Modulation des gesendeten Radarsignals, mindestens einer analogen Vorverabeitungsstufe für ein aus dem empfangenen Radarsignal gebildetes Zwischenfrequenzsignal, mindestens einer Analog/Digital-Wandlerstufe, und einem Prozessor zur Ansteuerung der Modulationseinrichtung und zur Weiterverarbeitung von digitalen Signalen der Analog/Digital-Wandlerstufe.

Bei einem FMCW-Radarsensor (Frequency Modulated Continuous Wave) wird das Radarsignal kontinuierlich gesendet, dabei jedoch in seiner Frequenz rampenförmig moduliert. Aus DE 10 2004 051 276 ist ein Radarsensor dieser Art bekannt, bei dem der Hochfrequenzteil und zumindest Teile der Modulationseinrichtung in einen einzigen Halbleiterbaustein, ein sogenanntes MMIC (Monolithic Microwave Integrated Circuit) integriert sind. Die übrigen Komponenten des Radarsensors werden durch getrennte analoge und digitale Funktionsbausteine gebildet, die speziell an den Aufbau und die jeweils gewünschte Arbeitsweise des Hochfrequenzteils angepaßt sind.

In Kraftfahrzeugen werden solche Radarsensoren generell in Verbindung mit Fahrerassistenzsystemen eingesetzt, beispielsweise zur automatischen Abstandsregelung, zur Kollisionswarnung und dergleichen. Da solche Systeme nicht nur zur Steigerung des Fahrkomforts dienen, sondern zunehmend auch sicherheitsrelevante Funktionen In Kraftfahrzeugen werden solche Radarsensoren generell in Verbindung mit Fahrerassistenzsystemen eingesetzt, beispielsweise zur automatischen Abstandsregelung, zur Kollisionswarnung und dergleichen. Da solche Systeme nicht nur zur Steigerung des Fahrkomforts dienen, sondern zunehmend auch sicherheitsrelevante Funktionen übernehmen, werden an die Zuverlässigkeit des Systems und damit auch an die Zuverlässigkeit des Radarsensors immer höhere Anforderungen gestellt.

Aus der US 2003/156060 A1 ist ein Radarsensor bekannt, bei dem die Empfangsseite des Hochfrequenzteils und ein Mikrocontroller auf einem gemeinsamen Substrat angeordnet sind.

### Offenbarung der Erfindung

Aufgabe der Erfindung ist es, einen kompakt aufgebauten Radarsensor zu schaffen, der sich einfacher und zuverlässiger steuern und überwachen läßt.

Diese Aufgabe wird erfindungsgemäß dadurch gelöst, daß in dem Baustein ein Sequenzierer enthalten ist, mit dem sich für den Meßprozeß unterschiedliche zeitliche Abläufe und Modulationsschemata programmieren lassen. Das erlaubt eine "Offline-Überwachung" und eine Entlastung des Mikroprozessors (keine Interrupts u. dgl.), so daß ein kostengünstigerer Prozessor verwendet werden kann.

Vorteilhafte Ausgestaltungen und Weiterbildungen der Erfindung sind in den Unteransprüchen angegeben.

Der Halbleiterbaustein faßt somit die wesentlichen digitalen und analogen Komponenten zusammen, die unterhalb des Hochfrequenzbandes arbeiten. Ein wesentlicher Vorteil besteht neben der Verringerung der Baugröße vor allem darin, daß durch die integrierte Bauweise eine wesentlich intensivere und einfachere Überwachung der verschiedenen Funktionskomponenten und eine Absteuerung unabhängig von den Aufgaben des Mikroprozessors ermöglicht wird, die Störanfälligkeit und die Verlustleistung reduziert werden und die elektromagnetische Verträglichkeit (EMV) verbessert wird. Verschiedene Register, die ebenfalls in den Halbleiterbaustein integriert sind, ermöglichen es, den Halbleiterbaustein durch entsprechende Konfiguration an unterschiedlich aufgebaute und/oder unterschiedlich arbeitende Hochfrequenzteile anzupassen, so daß für den Einsatz des Halbleiterbausteins ein hohes Maß an Flexibilität erreicht wird. Dies ermöglicht es, den anwendungspezifischen Halbleiterbaustein (ASIC) in verhältnismäßig großen Stückzahlen und damit wirtschaftlich herzustellen.

Eine standardisierte Schnittstelle zum Prozessor erlaubt es, als Prozessor einen Standard-Mikrocontroller einzusetzen.

In einer vorteilhaften Ausführungsform ist in den Halbleiterbaustein außerdem ein Taktfrequenzoszillator - oder zumindest dessen elektronischer Teil - integriert, der eine einheitliche Taktfrequenz für sämtliche Funktionen des Halbleiterbausteins sowie vorzugsweise auch für den Mikrocontroller bereitstellt.

### Kurze Beschreibung der Zeichnungen

Ein Ausführungsbeispiel der Erfindung ist in den Zeichnungen dargestellt und in der nachfolgenden Beschreibung näher erläutert.

Es zeigen:
- Fig. 1: ein Blockdiagramm eines erfindungsgemäßen Radarsensors; und
- Fig. 2: ein Blockdiagramm eines integrierten Halbleiterbausteins des Radarsensors nach Fig. 1.

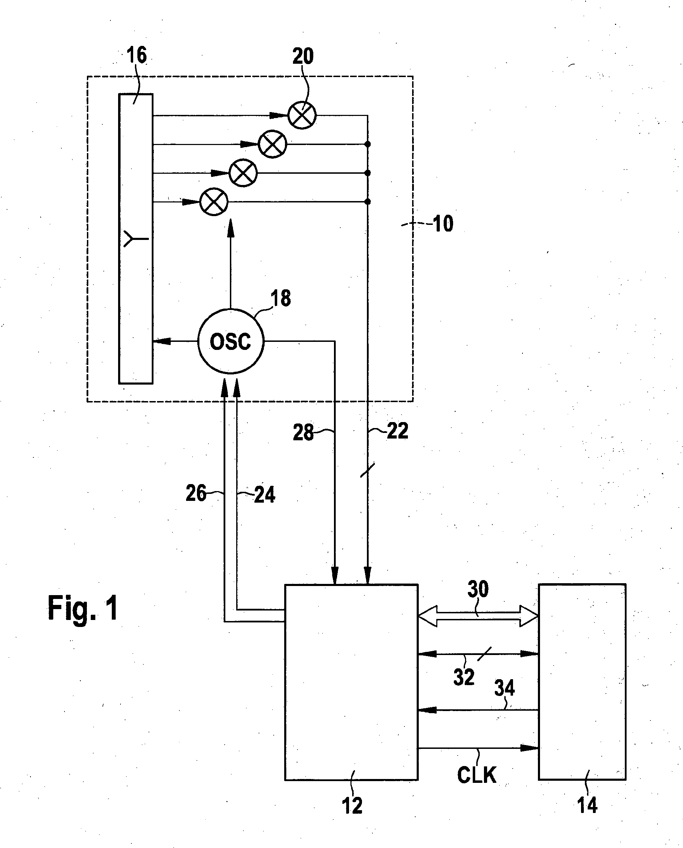

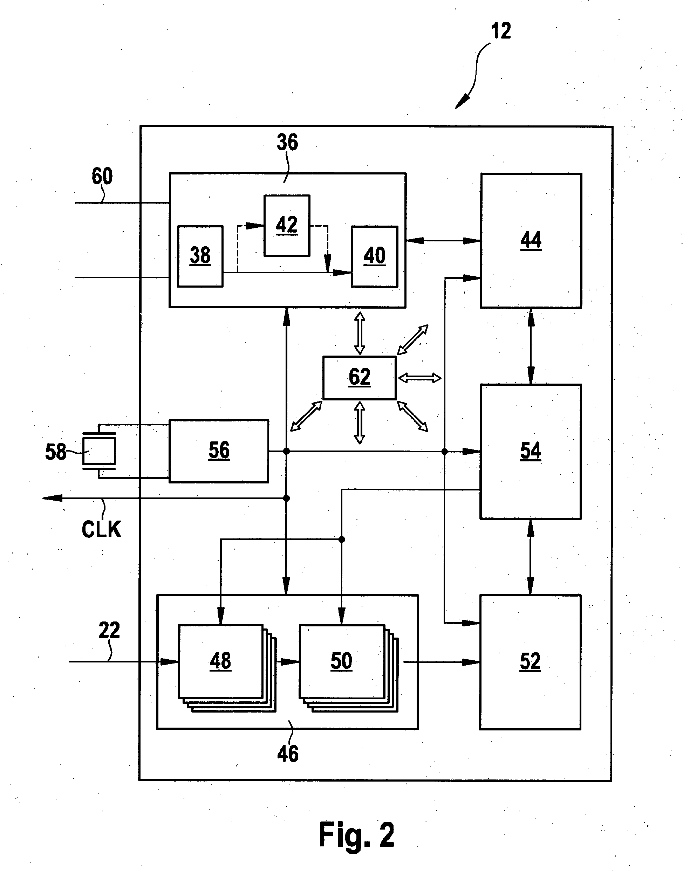

- Fig. 2: ein Blockdiagramm eines integrierten Halbleiterbausteins des Radarsensors nach Fig. 1.

### Ausführungsform der Erfindung

Der in Fig. 1 gezeigte Radarsensor umfaßt einen Hochfrequenzteil 10, einen integrierten Halbleiterbaustein 12 zur Ansteuerung des Hochfrequenzteils und zur Vorverarbeitung des empfangenen Radarsignals, sowie einen Prozessor 14 (beispielsweise einen Standard-Mikrocontroller), der Steuer- und Konfigurationsbefehle an den Halbleiterbaustein 12 übermittelt und die in diesem Halbleiterbaustein vorverarbeiteten Daten weiter auswertet.

Der Hochfrequenzteil 10 hat einen für FMCW-Radars üblichen Aufbau und umfaßt eine Antenhengruppe 16 mit mehreren, im gezeigten Beispiel vier, Antennenpatches, die hier sowohl zum Senden des Radarsignals wie auch zum Empfang des Radarechos dienen (monostatisches Antennenkonzept). Das zu sendende Radarsignal wird von einem spannungsgesteuerten Hochfrequenzoszillator 18 erzeugt. Die von den einzelnen Antennenpatches empfangenen Signale werden in Mischern 20 mit dem Signal des Hochfrequenzoszillators 18 gemischt, so daß man Zwischenfrequenzsignale 22 erhält, die dann auf (vier) parallelen Kanälen an den Halbleiterbaustein 12 übermittelt werden.

Steuerleitungen 24 und 26 vom Halbleiterbaustein 12 zum Hochfrequenzoszillator 18 dienen zur Steuerung der Amplitudenmodulation und zur Frequenzabstimmung und - modulation des Oszillators. Ein vom Hochfrequenzoszillator 18 geliefertes Rückkopplungssignal 28 erlaubt eine Regelung des Hochfrequenzoszillators in einer Frequenzregelschleife (FFL) oder, in dem hier betrachteten Beispiel, einer Phasenregelschleife (PLL).

Der Halbleiterbaustein 12 kommuniziert mit dem Prozessor 14 über einen digitalen Datenbus 30, beispielsweise einen 16 Bit Bus, und über Synchronisätions-und Adressenleitungen 32 und ist außerdem in der Lage, auf einer Leitung 34 einen Reset-Befehl vom Prozessor 14 zu empfangen. Umgekehrt liefert der Halbleiterbaustein 12 an den Prozessor 14 ein Taktsignal CLK, beispielsweise mit einer Frequenz von 40 MHz.

Der Aufbau des Halbleiterbausteins 12 ist in Fig. 2 näher dargestellt.

Eine wesentliche analoge Funktionsgruppe des Halbleiterbausteins ist eine Modulationseinrichtung 36 zur Frequenzmodulation und -abstimmung des Hochfrequenzoszillators 18. Im gezeigten Beispiel umfaßt diese Modulationseinrichtung eine Basis-Phasenregelschleife (FM-PLL) 38, die mit einer Frequenz von beispielsweise 2 GHz arbeitet, und eine weitere Phasenregelschleife 40 (MMIC-PLL), die dazu dient, auf der Grundlage des Signals der Basis-Phasenregelschleife den Hochfrequenzteil (MMIC) zu regeln, dessen Arbeitsfrequenzbad bei ca. 76 GHz liegt. Mit Hilfe dieser Komponenten wird die Frequenz des Hochfrequenzoszillators 18 moduliert, beispielsweise in zeitlich aufeinanderfolgenden steigenden und fallenden Rampen.

Die Modulationseinrichtung 36 enthält außerdem eine zusätzliche Phasenregelschleife 42, die bei Bedarf zwischengeschaltet werden kann, um den Hub oder die Lage der Frequenzrampen zu modifizieren.

Die Modulationseinrichtung 36 kommuniziert mit einem Registerblock 44, der verschiedene Steuer- und Parameterregister für die Steuerung der Modulationseinrichtung 36 sowie Fehlerregister zur Funktionsüberwachung enthält.

Zur Verarbeitung des vom Hochfrequenzoszillator 18 gelieferten Zwischenfrequenzsignals 22 weist der Halbleiterbaustein 12 einen Empfangspfad 46 auf. Eine Vorverarbeitungsstufe 48 dieses Empfangspfades besteht aus mehreren Blöcken, die das auf den vier Kanälen übermittelte Zwischenfrequenzsignal 22 kanalweise aufbereiten. Diese Vorverarbeitungsblöcke umfassen insbesondere rauscharme Vorverstärker, Modulationsfilter, Anti-Alliasing-Filter, Offset-Kompensatoren und dergleichen. Wie in Fig, 2 symbolisch dargestellt ist, sind diese Funktionsblöcke mehrfach vorhanden, im gezeigten Beispiel vierfach. Ihre Anzahl kann jedoch auch größer sein, so daß sich der Halbleiterbaustein 12 wahlweise auch für Hochfrequenzteile mit,mehr als vier Kanälen einsetzen läßt.

Eine Analog/Digital-Wandlersstufe 50 des Empfangspfades 46 wird durch ADC-Blöcke gebildet und umfaßt Analog/Digital-Wandler (z.B. Sigma-Delta-ADC's), sowie variable Dezimatoren (Abtaster) und Filter (z.B. FIR-Filter) zur Abtastung und Filterung der digitalisierten Signale. Die Anzahl der ADC-Blöcke entspricht der Anzahl der Vorverarbeitungsblöcke.

Die von den ADC-Blöcken digital aufbereiteten Signale werden über eine standardisierte Schnittstelle 52 an den Prozessor 14 ausgegeben oder wahlweise bis zum Abruf durch den Prozessor in einem Datenspeicher zwischengespeichert.

Weiterhin enthält der Halbleiterbaustein 12 einen Sequenzierer 54, der mit der Schnittstelle 52 und mit dem Registerblock 44 kommuniziert und sich (über den Prozessor 14) so programmieren läßt, daß er die Prozeßabläufe für unterschiedliche Arbeitsweisen des Radarsensors steuern kann. Diese Arbeitsweisen können sich beispielsweise in der Art der Frequenzmodulation und in der Reihenfolge und dem Wiederholungsschema der Modulationsrampen unterscheiden. Beispielsweise sind neben einer FMCW-Arbeitsweise auch eine kontinuierliche Arbeitsweise (CW) sowie die Funktionen Step-FMCW oder Multiplex-FMCW programmierbar. Ebenso lassen sich verschiedene Amplitudenmodulationen programmieren, beispielsweise zur globalen Steuerung der Sendeleistung oder für unterschiedliche Impulsmodulationsmuster. Auch die Arbeitsweise der Vorverarbeitungsstufe 48 und der Analog/Digtal-Wandlerstufe 50 wird vom Sequenzierer 54 gesteuert und damit an das jeweils versendete Modulationsschema angepaßt. Insbesondere können damit auch das Abtastmuster und die Lage der Abtastpunkte bei der Abtastung der digitalen Datenströme variiert werden.

Zur zeitlichen Koordination all dieser Funktionen enthält der Halbleiterbaustein 12 außerdem einen Taktsignaloszillator 56, der die verschiedenen Komponenten des Halbleiterbausteins 12 sowie auch den Prozessor 14 mit dem Taktsignal CLK versorgt. Zu diesem Taktsignaloszillator 56 gehört als Frequenzreferenz auch ein extern angeschlossener Quarzresonator 58.

Ebenso weist auch die Modulationseinrichtung 36 Anschlüsse 60 für externe Filterschaltungen auf.

Schließlich ist in den Halbleiterbaustein 12 eine interne Überwachungseinrichtung 62 integriert, die hier als separater Block dargestellt ist, deren Funktionen jedoch verteilt auf dem gesamten Halbleiterbaustein implementiert sind, so daß der Betriebszustand und die einwandfreie Arbeitsweise sämtlicher Funktionskomponenten überwacht werden können und etwaige Fehler in den Fehlerregistern des Registerblocks 44 festgehalten und dann über die Schnittstelle 52 an den Prozessor 14 gemeldet werden können.

## Patentansprüche

1. FMCW-Radarsensor für Kraftfahrzeuge, mit einem Hochfrequenzteil (10) zum erzeugen, senden und empfangen von Radarsignalen, einer Modulationseinrichtung (36) zur Steuerung der Modulation des gesendeten Radarsignals, mindestens einer analogen Vorverabeitungsstufe (48) für ein aus dem empfangenen Radarsignal gebildetes Zwischenfrequenzsignal (22), mindestens einer Analog/Digital-Wandlerstufe (50), und einem Prozessor (14) zur Ansteuerung der Modulationseinrichtung (36) und zur Weiterverarbeitung von digitalen Signalen der Analog/Digital-Wandlerstufe (50), derart ausgestaltet daß die Modulationseinrichtung (36), die Vorverabeitungsstufe (48) und die Analog/Digital-Wandlerstufe (50) in einen einzigen Halbleiterbaustein (12) integriert sind, der außerdem eine Überwachungseinrichtung (62) und Register (44) zur Konfiguration und Überwachung der Komponenten des Halbleiterbausteins sowie eine Schnittstelle (52) zum Prozessor (14) aufweist, **dadurch gekennzeichnet, dass** in den Halbleiterbaustein (12) ein programmierbarer Sequenzierer (54) zur variablen Steuerung der Arbeitsabläufe der Modulationseinrichtung (36) und der Analog/Digital-Wandlerstufe (50) integriert ist und der Sequenzierer (54) in dem Halbleiterbaustein (12) für die Steuerung unterschiedlicher Formen von Frequenz- und/oder Amplitudenmodulationen ausgelegt ist.

2. Radarsensor nach Anspruch 1, bei dem in den Halbleiterbaustein (12) ein Taktsignalgenerator (56) integriert ist, der die Funktionsgruppen dieses Halbleiterbausteins mit einem einheitlichen Taktsignal (CLK) versorgt.

3. Radarsensor nach Anspruch 2, bei dem der Taktsignalgenerator (56) auch den Prozessor (14) mit dem Taktsignal (CLK) versorgt.

## Claims

1. FMCW radar sensor for motor vehicles, having a radio-frequency section (10) for generating, transmitting and receiving radar signals, a modulation device (36) for controlling the modulation of the transmitted radar signal, at least one analogue preprocessing stage (48) for an intermediate frequency signal (22) formed from the received radar signal, at least one analogue/digital converter stage (50), and a processor (14) for controlling the modulation device (36) and for further processing digital signals from the analogue/digital converter stage (50), configured in such a manner that the modulation device (36), the preprocessing stage (48) and the analogue/digital converter stage (50) are integrated in a single semiconductor module (12) which also has a monitoring device (62) and a register (44) for configuring and monitoring the components of the semiconductor module as well as an interface (52) to the processor (14), **characterized in that** a programmable sequencer (54) for variably controlling the workflows of the modulation device (36) and of the analogue/digital converter stage (50) is integrated in the semiconductor module (12) and the sequencer (54) in the semiconductor module (12) is designed to control different forms of frequency and/or amplitude modulation.

2. Radar sensor according to Claim 1, in which a clock signal generator (56) is integrated in the semiconductor module (12) and supplies the functional groups of this semiconductor module with a standard clock signal (CLK).

3. Radar sensor according to Claim 2, in which the clock signal generator (56) also supplies the processor (14) with the clock signal (CLK).

## Revendications

1. Capteur radar FMCW pour véhicules à moteur, comportant une partie à haute fréquence (10) destinée à générer, émettre et recevoir des signaux radar, un dispositif de modulation (36) destiné à commander la modulation du signal radar émis, au moins un étage de prétraitement analogique (48) destiné à un signal à fréquence intermédiaire (22) formé à partir du signal radar reçu, au moins un étage convertisseur analogique/numérique (50), et un processeur (14) destiné à commander le dispositif de modulation (36) et à soumettre à d'autres traitements des signaux numériques de l'étage convertisseur analogique/numérique (50), conçu de manière à ce que le dispositif de modulation (36), l'étage de prétraitement (48) et l'étage convertisseur analogique/numérique (50) soient intégrés dans un composant à semi-conducteur unique (12) qui comprend en outre un dispositif de surveillance (62) et des registres (44) destinés à configurer et à surveiller les parties constitutives du composant à semi-conducteur ainsi qu'une interface (52) avec le processeur (14), **caractérisé en ce qu'**un séquenceur programmable (54) destiné à commander de manière variable la séquence de traitement du dispositif de modulation (36) et de l'étage convertisseur analogique/numérique (50) est intégré dans le composant à semi-conducteur (12) et **en ce que** le séquenceur (54) est configuré pour commander diverses formes de modulations de fréquence et/ou d'amplitude.

2. Capteur radar selon la revendication 1, dans lequel, dans le composant à semi-conducteur (12), est intégré un générateur d'horloge (56) qui délivre un signal d'horloge uniforme (CLK) aux groupes de fonctions de ce composant à semi-conducteur.

3. Capteur radar selon la revendication 2, dans lequel le générateur de signal d'horloge (56) délivre également le signal d'horloge (CLK) au processeur (14).
